# FASCICULE DE BREVET EUROPEEN

(11) **EP 1 787 370 B1**
(45) Date de publication et mention de la délivrance du brevet: **19.12.2007**
(21) Numéro de dépôt: 05805599.7
(22) Date de dépôt: 05.09.2005
(51) Int. Cl.: H02G 1/12

(54) **APPAREIL DE DÉNUDAGE D'UN CORPS DE RÉVOLUTION, EN PARTICULIER D'UN CÂBLE MULTICOUCHES CONCENTRIQUES ET OUTIL DE COUPE POUR UN TEL APPAREIL**
VORRICHTUNG ZUM ABZIEHEN EINES WICKELKÖRPERS, BESONDERS EINES KABELS MIT MEHREREN KONZENTRISCHEN SCHICHTEN UND SCHEIDWERKZEUG FÜR SOLCH EINE VORRICHTUNG
APPLIANCE FOR STRIPPING A WINDING BODY, ESPECIALLY A CABLE COMPRISING A PLURALITY OF CONCENTRIC LAYERS, AND CUTTING TOOL FOR ONE SUCH APPLIANCE

(30) Priorité: 06.09.2004 FR 0409386
(43) Date de publication de la demande: 23.05.2007
(73) Titulaire: Alroc, 72160 Tuffe (FR)
(72) Inventeur: ROUX, Didier, F-72190 Neuville-sur-Sarthe (FR)
(74) Mandataire: Laget, Jean-Loup
(86) Numéro de dépôt international: PCT/FR2005/002201
(87) Numéro de publication internationale: WO 2006/027491

(56) Documents cités:
- DE-U1- 20 117 063
- GB-A- 1 432 238
- US-A- 3 969 818
- US-A- 4 449 298

## Description

La présente invention concerne un appareil de dénudage d'un corps de révolution, en particulier d'un câble multicouches concentriques, tel qu'un câble électrique gainé, généralement de matière plastique, ainsi qu'un outil de coupe apte à équiper un tel appareil.

L'invention s'applique de manière générale à tout corps de révolution et plus particulièrement aux câbles dits secs notamment en polyéthylène haute densité qui sont des câbles électriques haute tension constitués depuis leur périphérie vers leur âme, de couches concentriques formant respectivement une gaine, une couche de semi-conducteur, une âme isolante et une âme conductrice, le dénudage ayant pour fonction d'éliminer au moins une desdites couches.

Le dénudage doit s'opérer de manière telle que la portion dénudée est parfaitement cylindrique quelle que soit la forme d'origine du câble qui peut présenter des défauts de concentricité des couches se traduisant par la présence de méplats à la surface du câble ou par une forme ovoïde de ce dernier. Lorsque le câble présente de tels défauts, l'utilisation d'appareils de dénudage traditionnels engendre la réalisation d'entailles dans la couche dénudée, entailles qui, soit peuvent être éliminées par ponçage lorsque leur profondeur le permet, soit nécessitent le changement du câble. En effet, dans les appareils de dénudage traditionnels, rien n'empêche le tranchant de la section de coupe de la lame de pénétrer dans l'épaisseur du câble lorsque le câble présente des défauts tels que mentionnés ci-dessus.

Cette problématique n'est pas résolue par le brevet US-A-3.969.818 qui décrit un appareil de dénudage avec un organe 92 de coupe d'une bande de matière sous forme d'un enroulement spiralé, le tranchant de la lame étant représenté en 98. Cet organe de coupe est un organe de coupe traditionnel, conforme à l'état de la technique, dans lequel rien n'empêche la réalisation d'entailles à la surface du câble en raison d'un défaut de concentricité du câble.

De la même manière, le brevet US-A-4.449.298 décrit un appareil de dénudage dans lequel l'organe de coupe radial, représenté en 15 aux figures, présente un tranchant 16 de coupe traditionnel qui n'est en rien empêché de pénétrer dans l'épaisseur du corps de révolution à dénuder. Cet organe de coupe est ici simplement monté sur un porte-lame ajustable radialement en position pour permettre un réglage de l'épaisseur de la bande à découper.

Il en est de même du brevet GB-A-1.432.238 dans lequel l'organe de coupe, représenté en 10 à la figure 1, présente des tranchants de coupe traditionnels qui ne sont en rien empêchés de pénétrer dans la matière du corps de révolution à dénuder lors d'un défaut de concentricité dudit corps.

Le modèle d'utilité allemand DE-201 17 063 décrit quant à lui un appareil de pelage et non de dénudage d'un corps de révolution. La lame de coupe est équipée de deux patins de part et d'autre d'une arête de coupe s'étendant parallèlement à l'axe du passage du corps de révolution. La présence d'une arête de coupe unique et sa disposition entre deux patins empêche la découpe d'une bande de matière sous forme d'un enroulement spiralé et limite les possibilités d'enlèvement de matière. Cette configuration empêche toute progression le long du corps de révolution car une telle progression amènerait à une disposition dans laquelle un patin serait sur une portion dénudée, tandis que l'autre patin serait sur une portion non dénudée.

Un but de la présente invention est donc de proposer un appareil de dénudage de câble dont la conception de l'organe de coupe permet d'empêcher le tranchant de l'organe de s'engager radialement de manière indésirée dans l'épaisseur du câble lorsque ce dernier présente des défauts de concentricité de ses couches tout en autorisant la découpe d'une bande de matière sous forme d'un enroulement spiralé.

A cet effet, l'invention a pour objet un appareil de dénudage d'un corps de révolution, en particulier d'un câble multicouches concentriques, tel qu'un câble électrique gainé, généralement de matière plastique, cet appareil, actionnable manuellement ou automatiquement, étant constitué d'un corps creux délimitant un passage d'introduction du câble à dénuder et d'un organe de coupe radial audit corps, cet organe de coupe qui comporte une section de fixation radiale, telle qu'une platine, de liaison audit corps prolongée d'au moins une section de coupe, faisant saillie dans le passage pour éliminer, à la demande, par déplacement relatif en rotation du corps et du câble, en particulier par rotation du corps autour du câble, au moins une couche extérieure du câble et rendre accessible l'une quelconque des couches intérieures constitutives du câble, notamment pour des interventions de maintenance ou de raccordement dans la zone dénudée, la section de coupe de l'organe de coupe étant conformée pour découper une bande de matière sous forme d'un enroulement spiralé, caractérisé en ce que la section de coupe de l'organe de coupe est prolongée d'un patin glissant apte à prendre appui sur une partie dénudée du câble, ce patin glissant étant positionné à l'opposé de la ligne de séparation de bande du tranchant de la section de coupe pour empêcher un engagement radial indésirable d'une portion de la section de coupe dans l'épaisseur du câble, en particulier lors de défauts de concentricité du câble.

Grâce à la présence d'un patin glissant apte à prendre appui sur la partie dénudée du câble et évitant à la section de coupe de pénétrer de manière non désirable dans l'épaisseur du câble lors de défauts de concentricité du câble, on obtient une zone dénudée parfaitement cylindrique permettant par la suite la réalisation d'un raccordement ou d'une épissure exempt de bulles d'air de manière à empêcher tout risque d'endommagement ultérieur du câble. La coopération du patin avec la section de coupe et son positionnement à l'opposé de la ligne de séparation de bande du tranchant autorisent la découpe de bande d'épaisseur quelconque sans nuire à la qualité de la découpe.

L'invention a encore pour objet un outil de coupe d'un corps de révolution, en particulier d'un câble multicouches concentriques, notamment pour l'utilisation dans un appareil de dénudage du type constitué d'un corps creux délimitant un passage d'introduction du câble à dénuder du type précité, ledit outil de coupe comportant une section de fixation radiale, telle qu'une platine, de liaison audit corps de l'appareil, cette section de fixation radiale étant prolongée d'au moins une section de coupe apte à faire saillie dans le passage dudit corps, cette section de coupe étant conformée pour découper une bande de matière sous forme d'un enroulement spiralé lors de l'entraînement en rotation du corps de l'appareil autour du câble et rendre accessible l'une quelconque des couches intérieures constitutives du câble, notamment pour des interventions de maintenance ou de raccordement dans la zone dénudée, caractérisé en ce que la section de coupe de l'organe de coupe est prolongée d'un patin glissant apte à prendre appui sur une partie dénudée du câble, ce patin glissant étant positionné à l'opposé de la ligne de séparation de bande du tranchant de la section de coupe pour empêcher un engagement radial indésirable d'une portion de la section de coupe dans l'épaisseur du câble, en particulier lors de défauts de concentricité du câble.

L'invention sera bien comprise à la lecture de la description suivante d'exemples de réalisation, en référence aux dessins annexés dans lesquels :
la figure 1 représente une vue d'ensemble sensiblement en perspective d'un appareil conforme à l'invention, le câble n'ayant pas été représenté ;
la figure 2 représente une vue de face de l'appareil de la figure 1 à l'état enserré du câble à l'intérieur dudit appareil ;
la figure 3 représente une vue en coupe d'un câble en cours de dénudage et du positionnement de l'organe de coupe sur ledit câble;
la figure 4 représente une vue partiellement en perspective de dessus d'un organe de coupe conforme à l'invention ;
la figure 5 représente une vue partiellement en perspective de dessous d'une lame de coupe conforme à l'invention ;
la figure 6 représente une vue partiellement en perspective de face d'un autre mode de réalisation d'un organe de coupe conforme à l'invention et
la figure 7 représente une vue partiellement en perspective de dessous d'un autre mode de réalisation d'un organe de coupe conforme à l'invention.

Comme mentionné ci-dessus, les appareils de dénudage de corps de révolution, en particulier de câble multicouches concentriques sont bien connus à ceux versés dans cet art. De telles opérations de dénudage sont nécessaires, notamment pour la réalisation de connexions électriques ou épissures pour lesquelles il convient d'enlever au moins une partie d'une couche extérieure de câble notamment la couche de revêtement ou d'isolation de câble électrique. Il est à noter que l'invention sera décrite ci-après pour une application au dénudage de câble bien qu'elle puisse s'appliquer de manière équivalente à la découpe sous forme d'une bande hélicoïdale de toute type de corps de forme générale cylindrique, tel que tube ou autre.

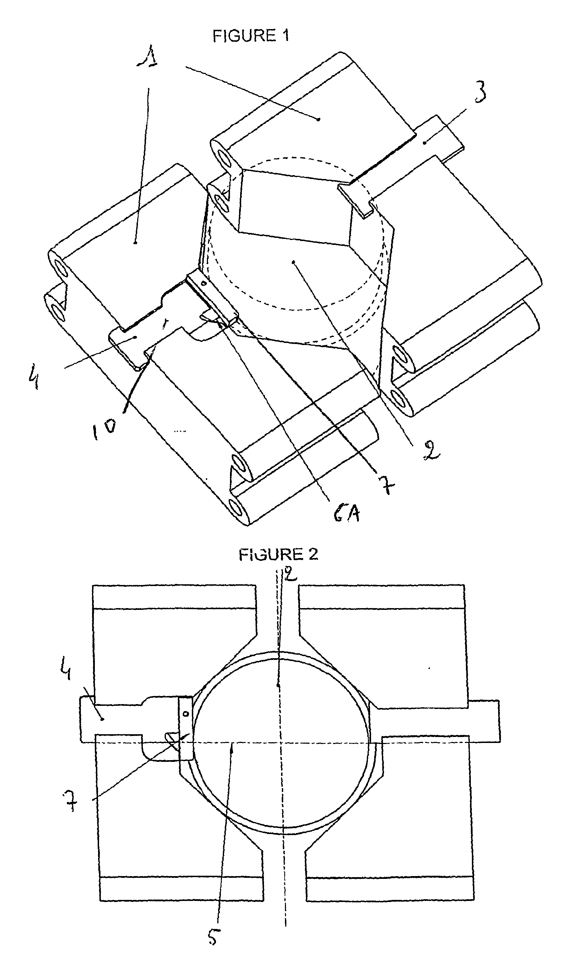

Les appareils de dénudage connus à ce jour se présentent sous forme d'un bloc d'allure générale parallélépipédique formé de deux parties reliées entre elles par des tiges de guidage de manière à permettre un rapprochement ou un écartement des parties de bloc entre elles par coulissement des parties de bloc le long desdites tiges. Les faces en regard des parties de bloc sont conformées généralement sous forme de rainures en V comme l'illustre la figure 1 de manière à ménager un passage 2 d'introduction du câble à dénuder. Des poignées sont également montées sous forme de tiges radiales sur ces parties de bloc pour permettre, dans le cas d'un actionnement manuel de l'appareil, un entraînement en rotation du corps de l'appareil autour du câble, par action sur lesdites poignées. Au moins l'une des parties de bloc est en outre équipée d'une rainure pour la réception d'un organe 4 de coupe. Cet organe 4 de coupe, une fois positionné dans la rainure du corps, s'étend radialement audit corps et fait saillie dans le passage 2. Cet organe 4 de coupe comporte une section 10 de fixation au corps réalisée sous forme d'une platine de liaison audit corps, cette section 10 de fixation étant prolongée d'au moins une section 6 de coupe. Selon le positionnement radial de l'organe 4 de coupe, on obtient une profondeur de coupe plus ou moins importante. Cette profondeur de coupe est donc réglable par le positionnement relatif de l'organe de coupe dans le corps de l'appareil. Une fois l'organe de coupe ou couteau pré-positionné à l'intérieur du corps, puis le corps de l'appareil installé autour du câble par rapprochement desdites parties de l'appareil et immobilisation de ces dernières dans une position dans laquelle les parties du corps servant à la délimitation du passage prennent appui sur le câble, l'opération de dénudage peut commencer par déplacement relatif du câble et de l'appareil, en particulier par entraînement en rotation de l'appareil autour du câble. Le dénudage s'opère au fur et à mesure du déplacement axial de l'appareil le long du câble. L'opération de dénudage est terminée lorsque le câble est dénudé sur une longueur correspondant par exemple à la zone dans laquelle un raccordement doit s'opérer. Il est à noter qu'un résultat équivalent est obtenu par rotation du câble à l'intérieur du passage du corps de l'appareil.

La section 6 de coupe de l'organe de coupe est conformée pour découper au fur et à mesure du déplacement axial de l'appareil le long du câble une bande de matière sous forme d'un enroulement spiralé. De manière caractéristique à l'invention, cette section 6 de coupe de l'organe 4 de coupe est prolongée d'un patin 7 glissant prenant appui sur une partie ZD dénudée du câble 5. Ce patin 7 glissant est positionné à l'opposé de la ligne de séparation de bande du tranchant de la section 6 de coupe pour empêcher un engagement radial indésirable d'une portion de la section 6 de coupe dans l'épaisseur du câble, en particulier lors de défauts de concentricité du câble 5.

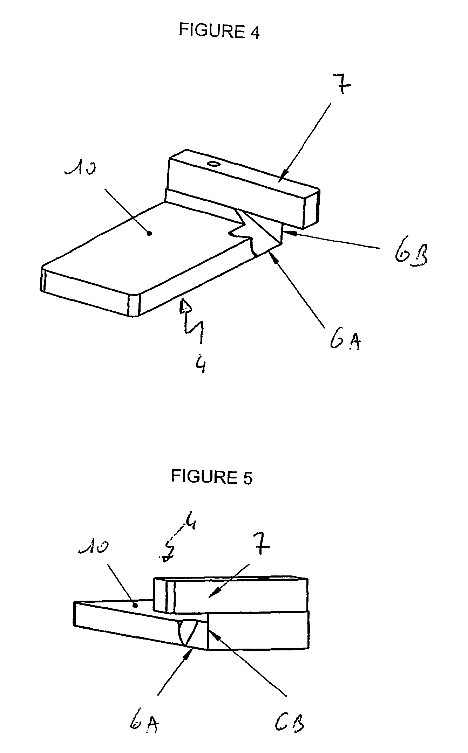

Dans l'exemple représenté aux figures 4 et 5, la section 6 de coupe de l'organe 4 de coupe est constituée d'un premier tranchant 6A orienté sur une droite qui coupe perpendiculairement l'axe du passage 2 d'introduction du câble 5 et d'un deuxième tranchant 6B orienté sensiblement parallèlement à l'axe dudit passage 2. Le premier tranchant sert à découper la bande de copeaux et à la séparer du reste du câble 5 tandis que le deuxième tranchant 6B sert plus particulièrement à décoller la bande ainsi découpée. La lame de coupe sera donc toujours conformée avec une section de coupe qui comporte une composante par rapport à une direction parallèle à l'axe dudit passage et une composante sensiblement perpendiculaire à l'axe du passage pour permettre un enlèvement automatique des copeaux par décollement du copeau séparé du câble au fur et à mesure de l'entraînement en rotation de l'appareil autour du câble et de son déplacement axial le long du câble.

Le patin 7 est donc positionné sur l'organe 4 de coupe au-delà du deuxième tranchant 6B. Lorsque la lame est vue de face, elle présente un premier tranchant 6A suivi d'un deuxième tranchant 6B lui-même suivi du patin 7. Le patin est donc bien situé à l'opposé du tranchant qui permet de séparer la bande tranchée du reste du câble, cette séparation étant obtenue plus particulièrement par le premier tranchant 6A, c'est-à-dire par le tranchant qui présente une composante sensiblement perpendiculaire à l'axe du passage de câble. En d'autres termes, le patin est décalé latéralement par rapport à la section 6 de coupe.

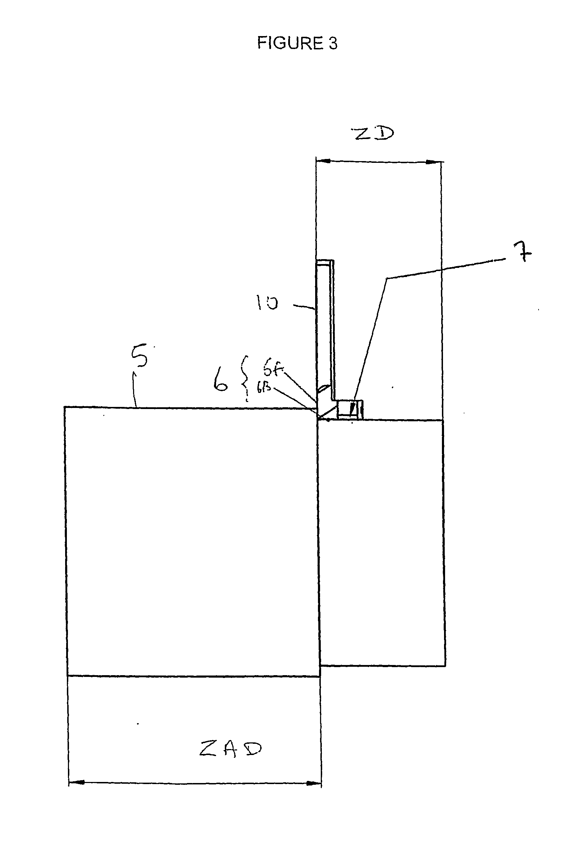

Pour obtenir une efficacité maximale du patin 7, le deuxième tranchant 6B de la section 6 de coupe de l'organe 4 de coupe est situé dans le même plan que le plan d'appui du patin 7 comme l'illustre notamment la figure 3. En outre, ce patin 7 se prolonge en amont du bord de la ligne de coupe de la section 6 de coupe pour prendre appui sur la zone ZD dénudée du câble 5 et maintenir constante la profondeur de coupe. Ce prolongement est plus particulièrement visible aux figures 4 et 5 où le patin affecte sensiblement la forme d'un doigt en saillie des tranchants de la section de coupe. Ce patin délimite ainsi une surface d'appui qui s'étend de part et d'autre de la ligne de coupe de la section de coupe. Pour faciliter l'avance de ce patin et son glissement sur la zone dénudée, l'extrémité distale de ce patin est arrondie.

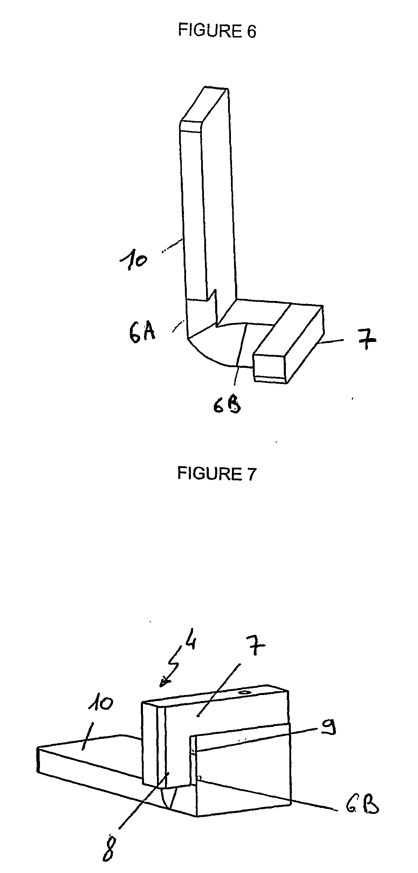

D'autres profils de coupe que celui décrit ci-dessus, dans lequel les premier et second tranchants s'étendent sensiblement perpendiculairement l'un par rapport à l'autre, peuvent être envisagés comme l'illustre en particulier la figure 6.

Bien que le rôle du patin 7 soit essentiellement d'empêcher le tranchant 6B de s'engager radialement dans l'épaisseur du câble lors de la présence d'un méplat ou d'un défaut de concentricité du câble, un rôle secondaire peut lui être attribué. En effet, ce patin peut être équipé d'une portion de retour 8 en amont de la ligne de coupe de la section 6 de coupe. Ce retour permet de délimiter un passage 9 calibré d'insertion du copeau en bande découpé. En outre, la surface d'appui de la portion de retour 8 du patin 7 sur la câble 5 peut être décalée radialement, en particulier radial externe, par rapport à la ligne de coupe pour permettre en fonction du réglage du décalage, le réglage de la vitesse d'avance des sections tranchantes de l'outil et l'avance axiale du corps d'appareil le long du câble 5. Ce mode de réalisation est plus particulièrement décrit à la figure 7. Il est à noter que le réglage de l'avance axiale du corps d'outil le long du câble peut également être opéré à l'aide d'une pièce appelée contre-fer. Cette pièce, représentée en 3 à la figure 1, est placée sur le corps de l'appareil à l'opposé de l'organe de coupe et vient se loger de manière similaire à l'organe de coupe dans une rainure radiale du corps de l'appareil. Ce contre-fer est décalé axialement par rapport au tranchant de la lame de coupe, le décalage correspondant au réglage de l'avance axiale du corps d'outil le long du câble.

Le fonctionnement d'un tel appareil est le suivant. Dans un premier temps, on introduit le câble dans le passage 2 du corps de l'appareil jusqu'à ce que son extrémité vienne buter contre la section 6A de l'organe 4 de coupe. On règle ensuite la section du passage 2 de l'appareil en faisant coulisser les deux parties de bloc sur les tiges mentionnées ci-dessus jusqu'à ce que les parties de bloc viennent s'appuyer contre le câble 5. A nouveau, une fois les parties de bloc en position autour du câble, ces parties sont immobilisées l'une par rapport à l'autre par l'intermédiaire de moyens de serrage ou de vissage appropriés. On règle le positionnement radial de l'organe 4 de coupe en fonction de l'épaisseur de l'isolant principal d'un câble multicouches dont l'embout doit être dénudé.

Une fois la profondeur de coupe déterminée, l'organe 4 de coupe est bloqué en position, généralement à l'aide de vis non représentées. On effectue alors un mouvement de rotation relatif entre l'outil et l'embout du câble en agissant sur des poignées non représentées équipant le corps de l'appareil. L'organe 4 de coupe commence alors, par son premier tranchant 6A, à entamer l'isolant puis très vite le tranchant 6B participe également à cette opération. A chaque tour, il se forme une spire d'un copeau en spirale. La portion de surface d'extrémité de câble, non encore entaillé, sert quant à elle de surface d'appui et permet notamment de régler l'avance axiale du corps de l'appareil le long dudit câble. La présence du patin 7 permet, au cours de cet entraînement en rotation de l'appareil autour du câble, d'éviter tout endommagement du câble par un engagement radial intempestif de la section de coupe de l'organe 4 de coupe dans l'épaisseur du câble lors de défaut de concentricité du câble. Ainsi, la zone dénudée ZD obtenue est parfaitement cylindrique quelle que soit la forme d'origine du câble à dénuder. On note que si le patin 7 décrit ci-dessus permet de maintenir une profondeur de coupe sensiblement constante, il ne permet en rien de régler la profondeur de coupe. Seul le réglage du positionnement axial de la lame permet un tel réglage de la profondeur de coupe.

## Revendications

1. Appareil (1) de dénudage d'un corps de révolution, en particulier d'un câble (5) multicouches concentriques, tel qu'un câble (5) électrique gainé, généralement de matière plastique, cet appareil (1), actionnable manuellement ou automatiquement, étant constitué d'un corps creux délimitant un passage (2) d'introduction du câble (5) à dénuder et d'un organe (4) de coupe radial audit corps, cet organe (4) de coupe qui comporte une section (10) de fixation radiale, telle qu'une platine, de liaison audit corps prolongée d'au moins une section (6) de coupe, faisant saillie dans le passage (2) pour éliminer, à la demande, par déplacement relatif en rotation du corps et du câble, en particulier par rotation du corps autour du câble (5), au moins une couche extérieure du câble et rendre accessible l'une quelconque des couches intérieures constitutives du câble, notamment pour des interventions de maintenance ou de raccordement dans la zone dénudée, la section (6) de coupe de l'organe (4) de coupe étant conformée pour découper une bande de matière sous forme d'un enroulement spiralé,
**caractérisé en ce que** la section (6) de coupe de l'organe (4) de coupe est prolongée d'un patin (7) glissant apte à prendre appui sur une partie (ZD) dénudée du câble (5), ce patin (7) glissant étant positionné à l'opposé de la ligne de séparation de bande du tranchant de la section (6) de coupe pour empêcher un engagement radial indésirable d'une portion de la section (6) de coupe dans l'épaisseur du câble, en particulier lors de défauts de concentricité du câble (5).

2. Appareil (1) selon la revendication 1,
**caractérisé en ce que** le patin (7) se prolonge en amont du bord de la ligne de coupe de la section (6) de coupe pour prendre appui sur la zone (ZD) dénudée du câble et maintenir constante la profondeur de coupe.

3. Appareil (1) selon l'une des revendications 1 et 2,
**caractérisé en ce que** la section (6) de coupe de l'organe (4) de coupe est constituée d'un premier tranchant (6A) orienté sur une droite qui coupe perpendiculairement l'axe du passage (2) d'introduction du câble (5) et d'un deuxième tranchant (6B) orienté sensiblement parallèlement à l'axe dudit passage (2), ce deuxième tranchant (6B) étant situé dans le même plan que le plan d'appui du patin (7).

4. Appareil (1) selon l'une des revendications 1 à 3,
**caractérisé en ce que** le patin (7) est équipé d'une portion de retour (8) en amont de la ligne de coupe de la section (6) de coupe pour délimiter un passage (9) calibré d'insertion du copeau en bande découpé.

5. Appareil (1) selon la revendication 4,
**caractérisé en ce que** la surface d'appui de la portion de retour (8) du patin (7) sur la câble (5) est décalée radialement, en particulier radial externe, par rapport à la ligne de coupe de la section (6) de coupe pour permettre en fonction du réglage du décalage, le réglage de la vitesse d'avance des sections tranchantes de l'outil et l'avance axiale du corps d'appareil le long du câble (5).

6. Outil de coupe d'un corps de révolution, en particulier d'un câble multicouches concentriques, notamment pour l'utilisation dans un appareil de dénudage du type constitué d'un corps creux délimitant un passage (2) d'introduction du câble (5) à dénuder, conformément à l'une des revendications 1 à 5, ledit outil de coupe comportant une section (10) de fixation radiale, telle qu'une platine, de liaison audit corps de l'appareil, cette section (10) de fixation radiale étant prolongée d'au moins une section (6) de coupe apte à faire saillie dans le passage dudit corps, cette section (6) de coupe étant conformée pour découper une bande de matière sous forme d'un enroulement spiralé lors de l'entraînement en rotation du corps de l'appareil autour du câble et rendre accessible l'une quelconque des couches intérieures constitutives du câble (5), notamment pour des interventions de maintenance ou de raccordement dans la zone dénudée (ZD),
**caractérisé en ce que** la section (6) de coupe de l'organe (4) de coupe est prolongée d'un patin (7) glissant apte à prendre appui sur une partie dénudée (ZD) du câble (5), ce patin (7) glissant étant positionné à l'opposé de la ligne de séparation de bande du tranchant de la section (6) de coupe pour empêcher un engagement radial indésirable d'une portion de la section (6) de coupe dans l'épaisseur du câble (5), en particulier lors de défauts de concentricité du câble (5).

7. Outil de coupe selon la revendication 6,
**caractérisé en ce que** le patin (7) se prolonge en amont du bord de la ligne de coupe de la section (6) de coupe pour prendre appui sur la zone (ZD) dénudée du câble (5) et maintenir constante la profondeur de coupe.

8. Outil de coupe selon l'une des revendications 6 et 7,
**caractérisé en ce que** la section (6) de coupe de l'organe (4) de coupe est constituée d'un premier tranchant (6A) orienté sur une droite qui coupe perpendiculairement l'axe du passage (2) d'introduction du câble (5) et d'un deuxième tranchant (6B) orienté sensiblement parallèlement à l'axe dudit passage (2), ce deuxième tranchant étant situé dans le même plan que le plan d'appui du patin (7).

9. Outil de coupe selon l'une des revendications 6 à 8,
**caractérisé en ce que** le patin (7) est équipé d'une portion de retour (8) en amont de la ligne de coupe de la section (6) de coupe pour délimiter un passage (9) calibré d'insertion du copeau en bande découpé.

10. Outil de coupe selon la revendication 9,
**caractérisé en ce que** la surface d'appui de la portion de retour (8) du patin (7) sur la câble (5) est décalée radialement, en particulier radial externe, par rapport à la ligne de coupe de la section (6) de coupe pour permettre en fonction du réglage du décalage, le réglage de la vitesse d'avance des sections tranchantes de l'outil et l'avance axiale du corps d'outil le long du câble (5).

## Claims

1. Device (1) for stripping a body of revolution, in particular a cable (5) with concentric multiple layers, such as a sheathed electric cable (5) which is generally made of plastics material, this device (1), which can be activated manually or automatically, consisting of a hollow body which delimits a passage (2) for introduction of the cable (5) to be stripped, and of a radial cutting unit (4) on the said body, this cutting unit (4) comprising a radial securing section (10) such as a plate, for prolonged connection to the said body of at least one cutting section (6) which projects into the passage (2), in order to eliminate on demand, by relative displacement in rotation of the body and the cable, in particular by rotation of the body around the cable (5), at least one outer layer of the cable, and to make accessible any one of the inner layers which constitute the cable, in particular for interventions of maintenance or connection in the stripped area, the cutting section (6) of the cutting unit (4) being designed to cut a strip of material in the form of a spiral coil, **characterised in that** the cutting section (6) of the cutting unit (4) is extended by a sliding runner (7) which can be supported on a stripped part (ZD) of the cable (5), this sliding runner (7) being positioned opposite the strip separation line of the cutting edge of the cutting section (6), in order to prevent undesirable radial engagement of a portion of the cutting section (6) in the thickness of the cable, in particular when the cable (5) has concentricity defects.

2. Device (1) according to claim 1, **characterised in that** the runner (7) is extended upstream from the edge of the cutting line of the cutting section (6) in order to be supported on the stripped area (ZD) of the cable and to keep the depth of cut constant.

3. Device (1) according to claim 1 or claim 2, **characterised in that** the cutting section (6) of the cutting unit (4) consists of a first cutting edge (6A) which is oriented along a straight line which intersects perpendicularly the axis of the passage (2) of introduction of the cable (5), and of a second cutting edge (6B) which is oriented substantially parallel to the axis of the said passage (2), this second cutting edge (6B) being situated on the same plane as the support plane of the runner (7).

4. Device (1) according to one of claims 1 to 3, **characterised in that** the runner (7) is equipped with a return portion (8) upstream from the cutting line of the cutting section (6) in order to delimit a calibrated passage (9) for insertion of the cut strip sliver.

5. Device (1) according to claim 4, **characterised in that** the support surface of the return portion (8) of the runner (7) on the cable (5) is offset radially, and in particular externally radially, relative to the cutting line of the cutting section (6), in order to permit, according to the adjustment of the offsetting, the adjustment of the speed of advance of the cutting sections of the tool and the axial advance of the body of the device along the cable (5).

6. Cutting tool of a body of revolution, in particular of a cable with concentric multiple layers, particularly for use in a stripping device of the type constituted by a hollow body which delimits a passage (2) for introduction of the cable (5) to be stripped, in accordance with one of claims 1 to 5, the said cutting tool comprising a radial securing section (10) such as a plate, for connection to the said body of the device, this radial securing section (10) being extended by at least one cutting section (6) which can project in the passage of the said body, this cutting section (6) being formed such as to cut a strip of material in the form of a spiral coil during the entrainment in rotation of the body of the device around the cable, and to make accessible any of the inner layers which constitute the cable (5), in particular for interventions of maintenance or connection in the stripped area (ZD), **characterised in that** the cutting section (6) of the cutting unit (4) is extended by a sliding runner (7) which can be supported on a stripped part (ZD) of the cable (5), this sliding runner (7) being positioned opposite the strip separation line of the cutting edge of the cutting section (6), in order to prevent undesirable radial engagement of a portion of the cutting section (6) in the thickness of the cable (5), in particular when the cable (5) has concentricity defects.

7. Cutting tool according to claim 6, **characterised in that** the runner (7) is extended upstream from the edge of the cutting line of the cutting section (6) in order to be supported on the stripped area (ZD) of the cable (5) and to keep the depth of cut constant.

8. Cutting tool according to claim 6 or claim 7, **characterised in that** the cutting section (6) of the cutting unit (4) consists of a first cutting edge (6A) which is oriented along a straight line which intersects perpendicularly the axis of the passage (2) of introduction of the cable (5), and of a second cutting edge (6B) which is oriented substantially parallel to the axis of the said passage (2), this second cutting edge (6B) being situated on the same plane as the support plane of the runner (7).

9. Cutting tool according to one of claims 6 to 8, **characterised in that** the runner (7) is equipped with a return portion (8) upstream from the cutting line of the cutting section (6) in order to delimit a calibrated passage (9) for insertion of the cut strip sliver.

10. Cutting tool according to claim 9, **characterised in that** the support surface of the return portion (8) of the runner (7) on the cable (5) is offset radially, and in particular externally radially, relative to the cutting line of the cutting section (6), in order to permit, according to the adjustment of the offsetting, the adjustment of the speed of advance of the cutting sections of the tool and the axial advance of the body of the tool along the cable (5).

## Patentansprüche

1. Gerät zum Abmanteln (1) eines Wicklungskörpers, insbesondere eines Kabels (5) mit einer Mehrzahl von konzentrischen Lagen, z.B. eines elektrischen Kabels (5) mit einem im Allgemeinen aus Kunststoff bestehenden Mantel, wobei das manuell oder automatisch antreibbare Gerät (1) einen Hohlkörper, der einen Durchlass (2) zum Einführen des abzumantelnden Kabels (5) begrenzt, und ein radial zum Hohlkörper ausgerichtetes Schneidelement (4) umfasst, wobei das Schneidelement (4), das einen um wenigstens einen Schneidabschnitt (6) verlängerten Radialbefestigungsabschnitt wie eine Platte zum Anlegen an den Hohlkörper umfasst, der in den Durchlass (2) ragt, um nach Betätigung durch eine relative Drehbewegung des Hohlkörpers und des Kabels, insbesondere durch Drehung des Hohlkörpers um das Kabel (5), wenigstens eine Außenlage des Kabels zu entfernen und eine beliebige Innenlage des Kabels freizulegen, insbesondere für Instandhaltungs- oder Anschlussarbeiten im abgemantelten Bereich, wobei der Schneidabschnitt (6) des Schneidelementes (4) ausgebildet ist, um eine spiralförmig gewickelte Materialbahn zu schneiden, **dadurch gekennzeichnet, dass** der Schneidabschnitt (6) des Schneidelementes (4) um einen Gleitschuh (7) verlängert ist, der fähig ist, an einem abgemantelten Teilstück (ZD) des Kabels (5) zur Anlage zu kommen, wobei der Gleitschuh (7) gegenüber der Bahntrennlinie der Schneide des Schneidabschnittes (6) angeordnet ist, um ein unerwünschtes radiales Eingreifen eines Teils des Schneidabschnittes (6) in die Dicke des Kabels, insbesondere bei Rundheitsfehlern des Kabels (5), zu verhindern.

2. Gerät (1) nach Anspruch 1, **dadurch gekennzeichnet, dass** der Gleitschuh (7) vor dem Rand der Schneidlinie des Schneidabschnittes (6) verlängert ist, um an dem abgemantelten Bereich (ZD) des Kabels in Anlage zu kommen und die Schneidtiefe konstant zu halten.

3. Gerät (1) nach einem der Ansprüche 1 und 2, **dadurch gekennzeichnet, dass** der Schneidabschnitt (6) des Schneidelementes (4) eine erste Schneide (6A), die auf einer Geraden ausgerichtet ist, die die Achse des Durchlasses (2) zum Einführen des Kabels (5) senkrecht schneidet, und eine zweite Schneide (6B) umfasst, die im Wesentlichen parallel zur Achse des Durchlasses (2) ausgerichtet ist, wobei die zweite Schneide (6B) in der gleichen Ebene wie die Anlagefläche des Gleitschuhs (7) angeordnet ist.

4. Gerät (1) nach einem der Ansprüche 1 bis 3, **dadurch gekennzeichnet, dass** der Gleitschuh (7) mit einem vor der Schneidlinie des Schneidabschnittes (6) abgewinkelten Stück (8) ausgerüstet ist, um einen verengten Durchlass (9) zum Einführen des abgeschnittenen Bahnstückes zu begrenzen.

5. Gerät (1) nach Anspruch 4, **dadurch gekennzeichnet, dass** die Anlagefläche des abgewinkelten Stücks (8) des Gleitschuhs (7) am Kabel (5) radial, insbesondere radial nach außen, zur Schneidlinie des Schneidabschnittes (6) versetzt ist, um in Abhängigkeit von der Einstellung des Versatzes die Einstellung der Vorschubgeschwindigkeit der Schneiden des Werkzeugs und den Axialvorschub des Hohlkörpers des Gerätes entlang des Kabels (5) zu ermöglichen.

6. Schneidwerkzeug eines Wicklungskörpers, insbesondere eines Kabels mit einer Mehrzahl von konzentrischen Lagen, insbesondere für die Verwendung in einem Abmantelgerät, das einen Hohlkörper umfasst, der einen Durchlass (2) zum Einführen des abzumantelnden Kabels (5) begrenzt, nach einem der Ansprüche 1 bis 5, wobei das Schneidwerkzeug einen Radialbefestigungsabschnitt wie eine Platte zum Anlegen an den Hohlkörper des Gerätes umfasst, wobei der Radialbefestigungsabschnitt (10) um wenigstens einen Schneidabschnitt (6) verlängert ist, der fähig ist, in den Durchlass des Hohlkörpers zu ragen, wobei der Schneidabschnitt (6) ausgebildet ist, um bei einem Drehantrieb des Hohlkörpers des Gerätes um das Kabel eine spiralförmig gewickelte Materialbahn zu schneiden und eine beliebige Innenlage des Kabels (5) freizulegen, insbesondere für Instandhaltungs- oder Anschlussarbeiten im abgemantelten Bereich, **dadurch gekennzeichnet, dass** der Schneidabschnitt (6) des Schneidelementes (4) um einem Gleitschuh (7) verlängert ist, der fähig ist, an einem abgemantelten Teilstück (ZD) des Kabels (5) zur Anlage zu kommen, wobei der Gleitschuh (7) gegenüber der Bahntrennlinie der Schneide des Schneidabschnittes (6) angeordnet ist, um ein unerwünschtes radiales Eingreifen eines Teils des Schneidabschnittes (6) in die Dicke des Kabels (5), insbesondere bei Rundheitsfehlern des Kabels (5), zu verhindern.

7. Schneidwerkzeug nach Anspruch 6, **dadurch gekennzeichnet, dass** der Gleitschuh (7) vor dem Rand der Schneidlinie des Schneidabschnittes (6) verlängert ist, um an dem abgemantelten Bereich (ZD) des Kabels (5) in Anlage zu kommen und die Schneidtiefe konstant zu halten.

8. Schneidwerkzeug nach einem der Ansprüche 6 und 7, **dadurch gekennzeichnet, dass** der Schneidabschnitt (6) des Schneidelementes (4) eine erste Schneide (6A), die auf einer Geraden ausgerichtet ist, die die Achse des Durchlasses (2) zum Einführen des Kabels (5) senkrecht schneidet, und eine zweite Schneide (6B) umfasst, die im Wesentlichen parallel zur Achse des Durchlasses (2) ausgerichtet ist, wobei die zweite Schneide in der gleichen Ebene wie die Anlagefläche des Gleitschuhs (7) angeordnet ist.

9. Schneidwerkzeug nach einem der Ansprüche 6 bis 8, **dadurch gekennzeichnet, dass** der Gleitschuh (7) mit einem vor der Schneidlinie des Schneidabschnittes (6) abgewinkelten Stück (8) ausgerüstet ist, um einen verengten Durchlass (9) zum Einführen des abgeschnittenen Bahnstückes zu begrenzen.

10. Schneidwerkzeug nach Anspruch 9, **dadurch gekennzeichnet, dass** die Anlagefläche des abgewinkelten Stücks (8) des Gleitschuhs (7) am Kabel (5) radial, insbesondere radial nach außen, zur Schneidlinie des Schneidabschnittes (6) versetzt ist, um in Abhängigkeit von der Einstellung des Versatzes die Einstellung der Vorschubgeschwindigkeit der Schneiden des Werkzeugs und den Axialvorschub des Werkzeugkörpers entlang des Kabels (5) zu ermöglichen.
